# EUROPEAN PATENT APPLICATION

(11) **EP 4 737 100 A1**
(43) Date of publication of application: **06.05.2026**
(21) Application number: 23943569.6
(22) Date of filing: 27.06.2023
(51) Int. Cl.: B29C 64/188, B29C 64/124, B33Y 40/20, B33Y 80/00

(54) **STEREOLITHOGRAPHIC ARTICLE FOR VEHICLE AND METHOD FOR PRODUCING SAME**

(71) Applicant: Nissan Motor Co., Ltd., Yokohama-shi, Kanagawa 221-0023 (JP)
(72) Inventor: NOGUCHI, Yuji, Atsugi-shi, Kanagawa 243-0123 (JP); ENDO, Tomoya, Atsugi-shi, Kanagawa 243-0123 (JP); YOSHIDA, Akira, Atsugi-shi, Kanagawa 243-0123 (JP)
(74) Representative: Hoefer & Partner Patentanwälte mbB
(86) International application number: PCT/JP2023/023756
(87) International publication number: WO 2025/004168

(57) **Abstract**

In order to make the film thickness of a coating film (15) uniform, a stereolithographic article (1) has: a main body having a plurality of step-like recessed portions (12) formed in a layering direction by stereolithography; groove portions (13) or wall portions (14) formed discretely in the step-like recessed portions (12); and a coating film (15) applied to a surface of the main body including the step-like recessed portions (15).

## Description

### Technical Field

The present invention relates to a stereolithographic article for a vehicle and a method for producing the same.

### Background Art

Optical shaped articles, by their very nature, have step-like recessed portions that are cured by scanning light. The surface is therefore smoothed by applying a photocurable resin with such high viscosity that it can fill the recessed portions due to surface tension (Patent Document 1).

### Prior Art Documents

### Patent Documents

Patent Document 1: JP5-337951A

### Summary of Invention

### Problems to be solved by Invention

When the optical shaped article is small as in the above prior art and the step-like recessed portion has a short extension length, the high-viscosity paint can fill the recessed portion, and its surface can readily be smoothed. However, if the optical shaped article is large and the step-like recessed portion has a long extension length, such as in the case of a component for vehicles, the paint applied to the step-like recessed portion shrinks and aggregates due to surface tension, resulting in a problem of uneven film thickness in the step-like recessed portion.

A problem to be solved by the present invention is to provide a stereolithographic article for vehicles in which the film thickness of the step-like recessed portion is uniform.

### Means for solving Problems

The present invention solves the above problem through discretely forming groove portions or wall portions in a plurality of step-like recessed portions formed in a layering direction by stereolithography, and applying paint to the surface of a main body including the step-like recessed portions.

### Effect of Invention

According to the present invention, the film thickness in the step-like recessed portions becomes uniform.

### Brief Description of Drawings

[FIG. 1] FIG. 1 is a perspective view illustrating an embodiment of a stereolithographic article according to the present invention.
[FIG. 2] FIG. 2 is a device configuration diagram illustrating an example of a stereolithography device for producing a stereolithographic article according to the present invention.
[FIG. 3A] FIG. 3A is an enlarged perspective view illustrating an enlarged view of part III of FIG. 1.
[FIG. 3B] FIG. 3B is a cross-sectional view taken along line IIIB-IIIB of FIG. 3A.
[FIG. 3C] FIG. 3C is a cross-sectional view illustrating an example of a coating film formed on the step-like recessed portions of FIG. 3B.
[FIG. 4A] FIG. 4A is a perspective view illustrating an embodiment of groove portions according to the present invention.
[FIG. 4B] FIG. 4B is a perspective view for describing the action of an embodiment of the groove portions according to the present invention.
[FIG. 4C] FIG. 4C is a view taken along arrow IVC of FIG. 4A.
[FIG. 4D] FIG. 4D is a cross-sectional view taken along line IVD-IVD of FIG. 4C.
[FIG. 5A] FIG. 5A is a perspective view illustrating an embodiment of groove portions according to the present invention.
[FIG. 5B] FIG. 5B is a perspective view illustrating another embodiment of groove portions according to the present invention.
[FIG. 6A] FIG. 6A is a perspective view illustrating an embodiment of wall portions according to the present invention.
[FIG. 6B] FIG. 6B is a perspective view illustrating the action of an embodiment of the wall portions according to the present invention.
[FIG. 6C] FIG. 6C is a view taken along arrow VIC of FIG. 6A.
[FIG. 6D] FIG. 6D is a cross-sectional view taken along line VID-VID of FIG. 6C.
[FIG.7A ] FIG. 7A is a perspective view illustrating an embodiment of wall portions according to the present invention.
[FIG. 7B] FIG. 7B is a perspective view illustrating another embodiment of wall portions according to the present invention.

### Mode(s) for carrying out Invention

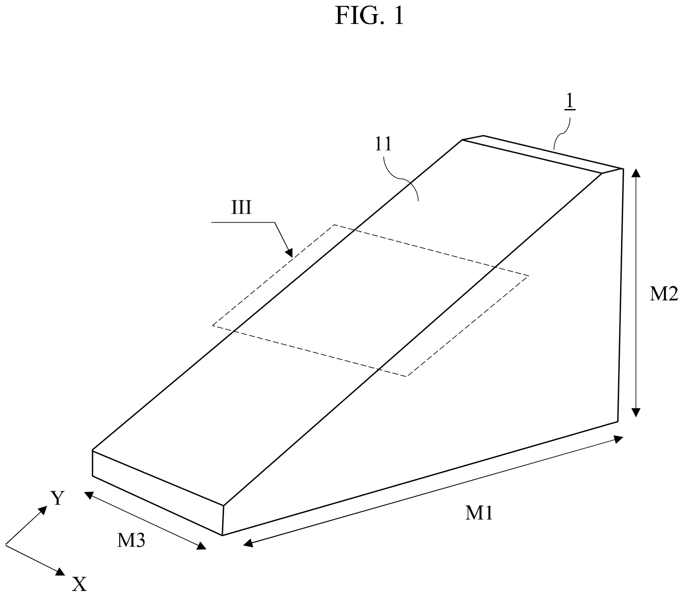

Hereinafter, one or more embodiments for carrying out the present invention will be described with reference to the drawings. Stereolithographic article 1 of the present embodiment is an article used, for example, as a component for automobiles. It is not particularly limited, provided that it is composed of a photocurable resin, and its examples include all the components for automobiles. In the following description, the present invention will be described using the stereolithographic article 1 as an example, although it is not a specific component for automobiles. FIG. 1 is a perspective view illustrating an embodiment of the stereolithographic article 1 according to the present invention. The stereolithographic article 1 of the present embodiment has a shape obtained by cutting a rectangular parallelepiped along a diagonal slope, and has a slope 11. The stereolithographic article 1 of such a shape can be produced, for example, as follows.

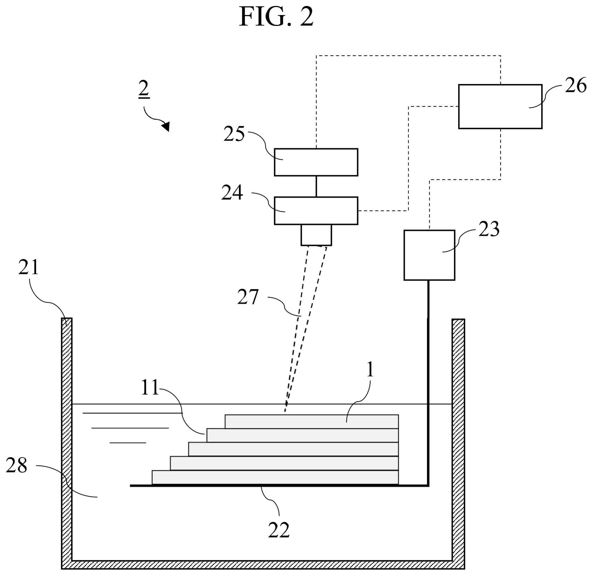

FIG. 2 is a device configuration diagram illustrating an example of a stereolithography device 2 for producing the stereolithographic article 1 of the present embodiment. The stereolithography device 2 of this example is a laser scanning stereolithography device 2 and includes a liquid vat 21 containing an ultraviolet-curable resin 28 as a photocurable resin, a table 22 raised and lowered within the liquid vat 21 by an elevator 23, a scanner 24 that emits ultraviolet laser light near the liquid surface of the liquid vat 21 in a desired scanning pattern, an ultraviolet laser light irradiator 25 that generates the ultraviolet laser light, and a controller 26 that controls the elevator 23, scanner 24, and ultraviolet laser light irradiator 25.

The controller 26 stores three-dimensional shape data of the desired stereolithographic article 1. This three-dimensional shape data is decomposed (sliced) in the layering direction at a predetermined layering pitch, and the data decomposed for each layering pitch is output to the scanner 24 and the elevator 23. Upon receiving the data for each layering pitch from the controller 26, the scanner 24 scans the ultraviolet laser light from the ultraviolet laser light irradiator 25 in accordance with the data for each layering pitch and irradiates the uncured ultraviolet-curable resin 28 on the upper surface of the table 22 with the ultraviolet laser light. This forms a layer corresponding to one layering pitch. After the formation of one layer is completed, the elevator 23 lowers the table 22 by the layering pitch of one layer, and performs formation of the next layer. By repeating this process, the stereolithographic article 1 with a desired three-dimensional shape is produced.

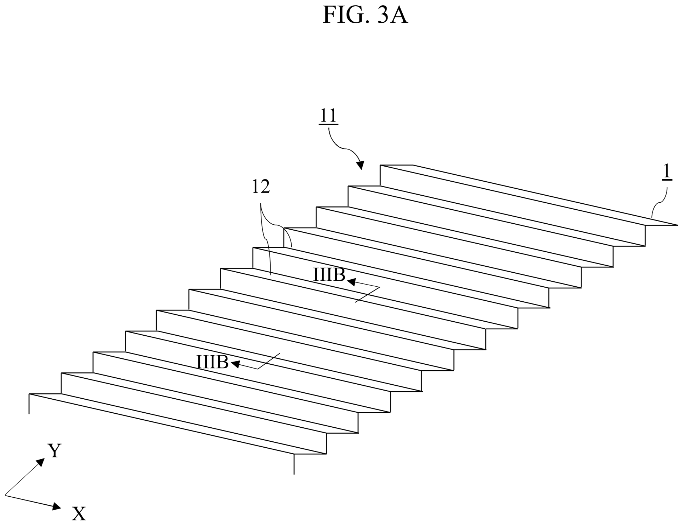

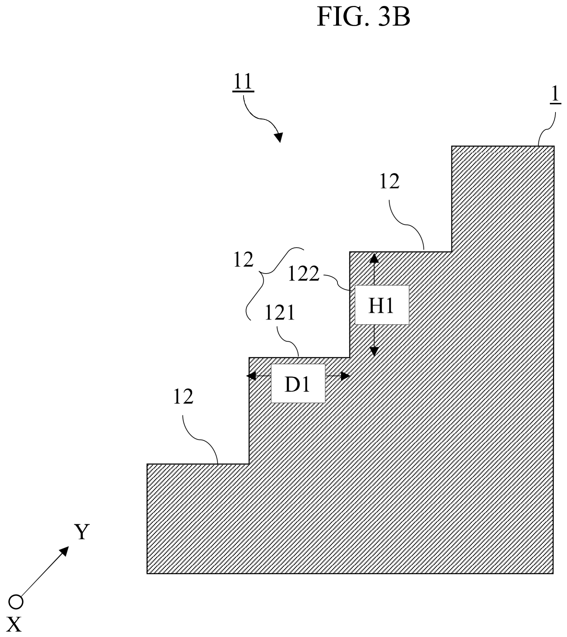

The stereolithographic article 1 of the present embodiment can be produced by stereolithography using a surface exposure scheme in addition to such a laser scanning scheme. In any of the schemes, step-like recessed portions 12 corresponding to the layering pitch are formed on the slope 11. FIG. 3A is an enlarged perspective view of part III of FIG. 1, and FIG. 3B is a cross-sectional view taken along line IIIB-IIIB of FIG. 3A. In these drawings, the direction in which the step-like recessed portions 12 extend is referred to as an X-axis direction, and the direction in which the slope 11 extends, perpendicular to the X-axis direction, is referred to as a Y-axis direction.

As illustrated in FIG. 3B, the step-like recessed portions 12 formed on the slope 11 of the stereolithographic article 1 are each composed of a step 121 with a depth D1 and a vertical wall 122 with a height H1, and the height H1 of the vertical wall 122 corresponds to the layering pitch. If the depth D1 of the step 121 or the height H1 of the vertical wall 122 is large, the appearance of the slope 11 of the stereolithographic article 1 as a finished product will be deteriorated. Here, reducing the layering pitch reduces the height H1 of the vertical wall of the step-like recessed portions 12, and it is possible to minimize the deterioration in the appearance of the slope 11. However, reducing the layering pitch increases the production time accordingly and reduces the productivity. In particular, since automotive parts are produced in large quantities, measures that result in a decrease in the productivity are unrealistic.

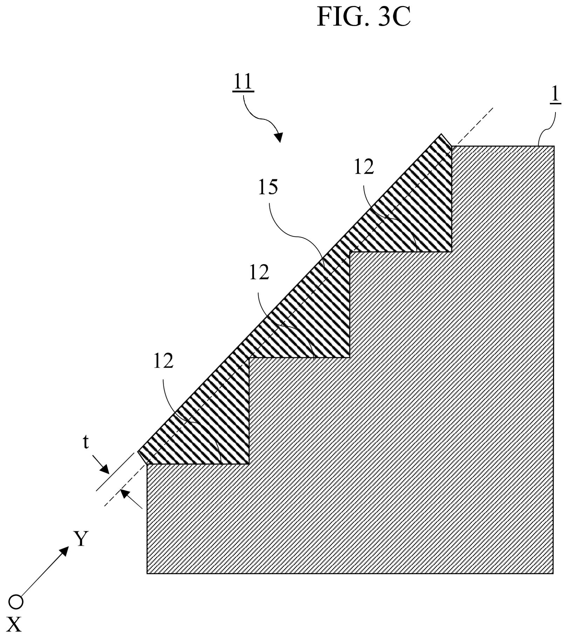

In the stereolithographic article 1 of the present embodiment, therefore, instead of reducing the layering pitch, paint is applied to the step-like recessed portions 12, and as illustrated in FIG. 3C, the step-like recessed portions 12 are filled with a coating film 15, thereby smoothing the surface of the slope 11. The layering pitch of the stereolithographic article 1 of the present embodiment is not particularly limited, but is preferably 35 to 350 µm. A layering pitch of less than 35 µm is undesirable, as it increases the production time for the stereolithographic article 1 and reduces the productivity. On the other hand, a layering pitch of more than 350 µm is undesirable, as it increases the step dimension of the step-like recessed portions 12, and it will be difficult to smooth the surface by filling it with the coating film 15.

Methods for applying paint to the step-like recessed portions 12 include those using a brush, spatula, roller brush, spray, curtain flow coater, etc., but a dip coating method is more preferred, in which the stereolithographic article 1 is immersed in a paint bath containing the paint.

The paint applied to the stereolithographic article 1 of the present embodiment is not particularly limited, and bake-curable paints and ultraviolet-curable resin paints can be used. The ultraviolet-curable paints that can be used in the present embodiment include those prepared by blending a known ultraviolet-curable resin composition with, as needed, a colorant and known paint additives (e.g., antifoaming agents such as silicone oil, fluorine-based surfactants, silicone-based surfactants, leveling agents such as acrylic copolymers, thickeners, viscosity reducers, etc.). Ultraviolet-curable resin compositions can be broadly divided into ultraviolet-radical curing resin compositions and cation-curable resin compositions. In the present embodiment, any of the ultraviolet-curable resin compositions can be used.

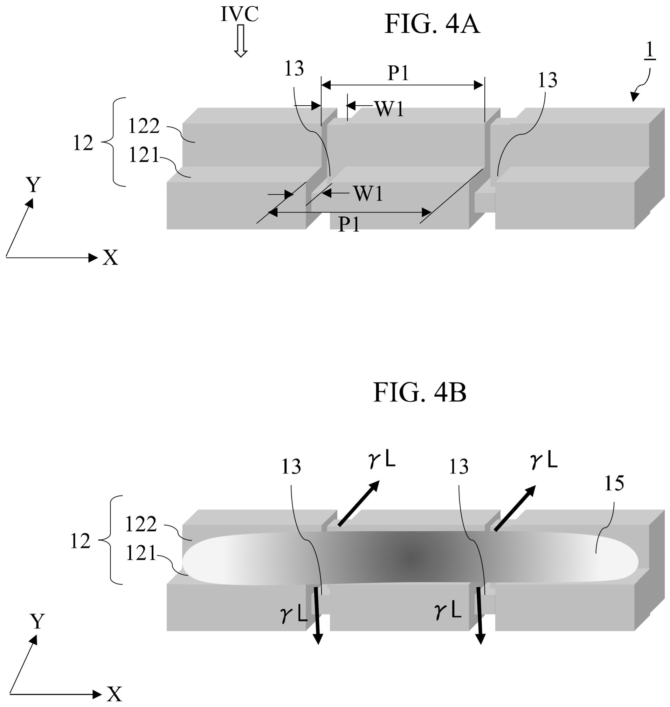

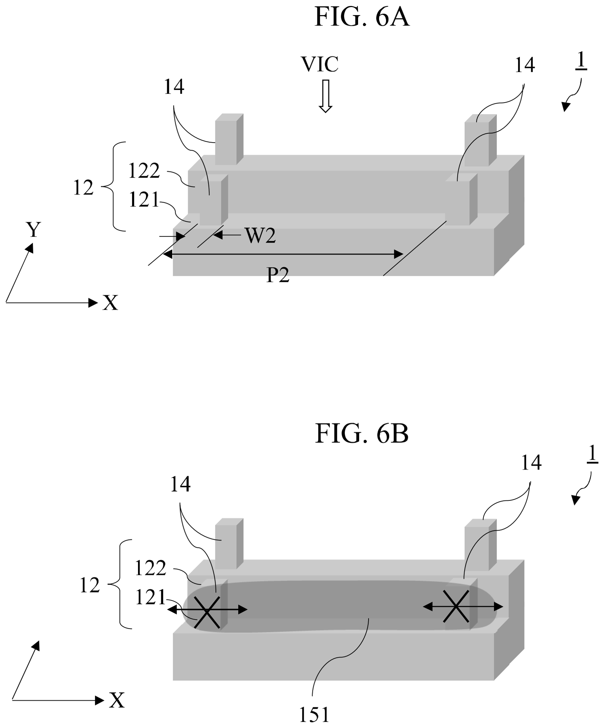

When the stereolithographic article 1 is immersed in paint and the paint is applied to the step-like recessed portions 12, the paint applied to the step-like recessed portions 12 shrinks due to surface tension and partially aggregates, resulting in a problem of uneven film thickness in the step-like recessed portions 12. In the stereolithographic article 1 of the present embodiment, therefore, groove portions 13 or wall portions 14 are discretely formed in the step-like recessed portions 12 to prevent the paint applied to the step-like recessed portions 12 from shrinking due to surface tension. FIGS. 4A to 5B illustrate embodiments of the present invention in which groove portions 13 are formed, and FIGS. 6A to 7B illustrate embodiments of the present invention in which wall portions 14 are formed. While the groove portions 13 and wall portions 14 are not illustrated in FIGS. 1 and 3A to 3C, the groove portions 13 or wall portions 14 illustrated in FIGS. 4A to 7B are formed.

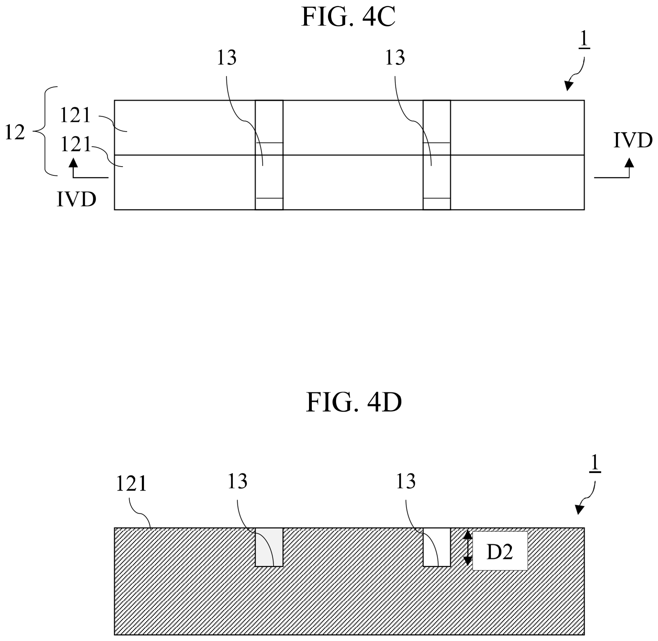

FIG. 4A is a perspective view illustrating an embodiment of groove portions 13 according to the present invention, FIG. 4B is a perspective view illustrating the action of an embodiment of the groove portions 13 according to the present invention, FIG. 4C is a plan view taken along arrow IVC of FIG. 4A, and FIG. 4D is a cross-sectional view taken along line IVD-IVD of FIG. 4C. For the plurality of step-like recessed portions 12 formed on the slope 11, the groove portions 13 of the present embodiment are formed discretely in the extension direction (X-axis direction) of each of the plurality of step-like recessed portions 12 formed on the slope 11.

The groove portions 13 of the present embodiment are formed in at least one of steps 121 and vertical walls 122 of the step-like recessed portions 12, and more preferably, in both the steps 121 and vertical walls 122 of the step-like recessed portions 12. FIG. 4A illustrates an example in which the groove portions 13 are formed in both the steps 121 and vertical walls 122 of the step-like recessed portions 12.

The groove width W1 and groove depth D2 of one groove portion 13 are not particularly limited. For example, the groove width W1 of the groove portions 13 is greater than 5 µm and less than 100 µm, preferably 5 to 80 µm, and more preferably 10 to 60 µm. This is because if the groove width W1 of the groove portions 13 exceeds 100 µm, it will affect the smoothness of the surface of the coating film 15. The groove depth D2 of the groove portions 13 is preferably 50% or more of the layering pitch (height H1 of the vertical walls 122), that is, 17.5 to 175 µm. This is because if the groove depth D2 of the groove portions 13 is less than 50% of the layering pitch, shrinkage of the uncured paint 151 applied to the step-like recessed portions 12 cannot be sufficiently suppressed.

The distance P1 between two adjacent groove portions 13 formed in one step-like recessed portion 12 is not particularly limited, but is, for example, greater than 5 µm and less than 500 µm, preferably 100 to 400 µm, and more preferably 200 to 300 µm. This is because if the distance P1 between two adjacent groove portions 13 exceeds 500 µm, shrinkage of the uncured paint 151 applied to the step-like recessed portions 12 cannot be sufficiently suppressed.

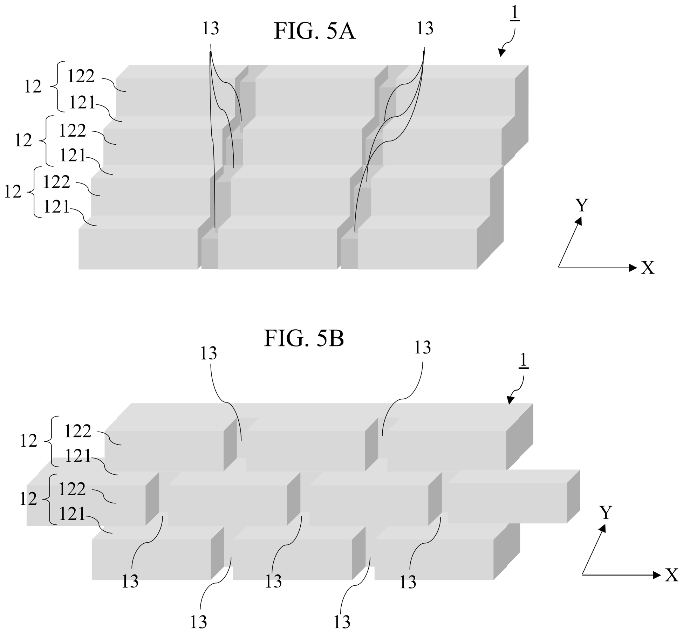

FIG. 5A is a perspective view illustrating an embodiment of groove portions 13 according to the present invention, and FIG. 5B is a perspective view illustrating another embodiment of groove portions 13 according to the present invention. As illustrated in FIG. 5A, the groove portions 13 according to the present invention may be formed at the same positions in the X-axis direction relative to a plurality of step-like recessed portions 12, 12, ... formed on the slope 11 along the Y-axis direction. Alternatively, as illustrated in FIG. 5B, for the plurality of step-like recessed portions 12, 12, ... formed on the slope 11 along the Y-axis direction, the groove portions 13 according to the present invention may be formed at positions that are offset in the X-axis direction for each or every plurality of the step-like recessed portions 12. By forming the groove portions 13 at positions that are offset in the X-axis direction for each or every plurality of the step-like recessed portions 12, the influence of the groove portions 13 is uniform across the entire slope 11.

As described above, when the groove portions 13 are discretely formed in the step-like recessed portions 12, as illustrated in FIG. 4B, the uncured paint 151 applied to the step-like recessed portions 12 tend to shrink due to its own surface tension. Fortunately, however, force yL, which is the product of a capillary force γ of a groove and a circumferential length L of the groove, is generated in the groove portion 13, and it is therefore possible to suppress the shrinkage of the uncured paint 151. As a result, the uncured paint 151 applied to the step-like recessed portions 12 is fixed in place, thereby achieving a uniform film thickness for the coating film 15.

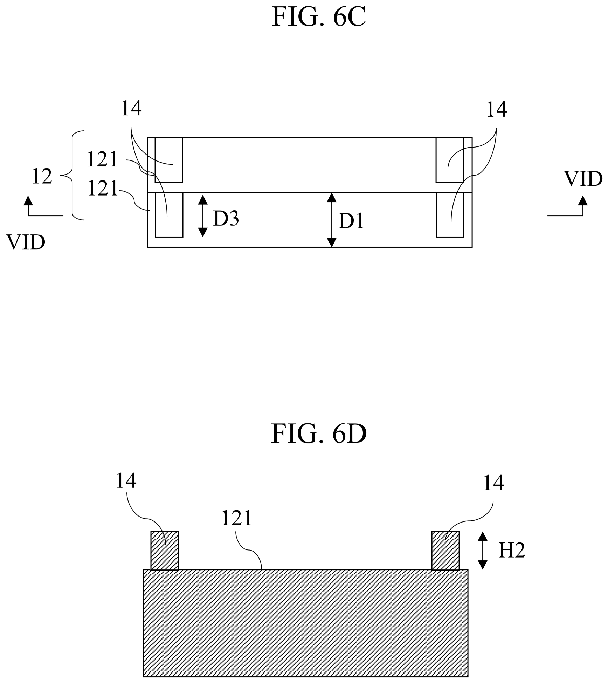

FIG. 6A is a perspective view illustrating an embodiment of wall portions 14 according to the present invention, FIG. 6B is a perspective view illustrating the action of an embodiment of the wall portions 14 according to the present invention, FIG. 6C is a plan view taken along arrow VIC of FIG. 6A, and FIG. 6D is a cross-sectional view taken along line VID-VID of FIG. 6C. For the plurality of step-like recessed portions 12 formed on the slope 11, the wall portions 14 of the present embodiment are formed discretely in the extension direction (X-axis direction) of each of the plurality of step-like recessed portions 12 formed on the slope 11.

In the present embodiment, the wall portions 14 are formed on steps 121 of the step-like recessed portions 12, but may also be formed in contact with vertical walls 122 of the step-like recessed portions 12. FIG. 6A illustrates an example of the wall portions 14 which are formed on a step 121 of the step-like recessed portions 12 and in contact with a vertical wall 122.

The wall thickness W2, wall height H2, and wall length D3 in the wall step direction of one wall portion 14 are not particularly limited. For example, the wall thickness W2 of the wall portions 14 is greater than 5 µm and less than 100 µm, preferably 5 to 80 µm, and more preferably 10 to 60 µm. This is because if the wall width W2 of the wall portions 14 exceeds 100 µm, it will affect the smoothness of the surface of the coating film 15. The wall height H2 of the wall portions 14 is preferably 50% or more of the layering pitch (height H1 of the vertical walls 122), that is, 17.5 to 175 µm. This is because if the wall height H2 of the wall portions 14 is less than 50% of the layering pitch, shrinkage of the uncured paint 151 applied to the step-like recessed portions 12 cannot be sufficiently suppressed. The length D3 of the wall portions 14 in the wall step direction is preferably 50% or more of the depth D1 of the steps 121. This is because if the length D3 of the wall portions 14 in the wall step direction is less than 50% of the depth D1 of the steps 121, shrinkage of the uncured paint 151 applied to the step-like recessed portions 12 cannot be sufficiently suppressed.

The distance P2 between two adjacent wall portions 14 formed in one step-like recessed portion 12 is not particularly limited, but is, for example, greater than 5 µm and less than 500 µm, preferably 100 to 400 µm, and more preferably 200 to 300 µm. This is because if the distance P2 between two adjacent wall portions 14 exceeds 500 µm, shrinkage of the paint applied to the step-like recessed portions 12 cannot be sufficiently suppressed.

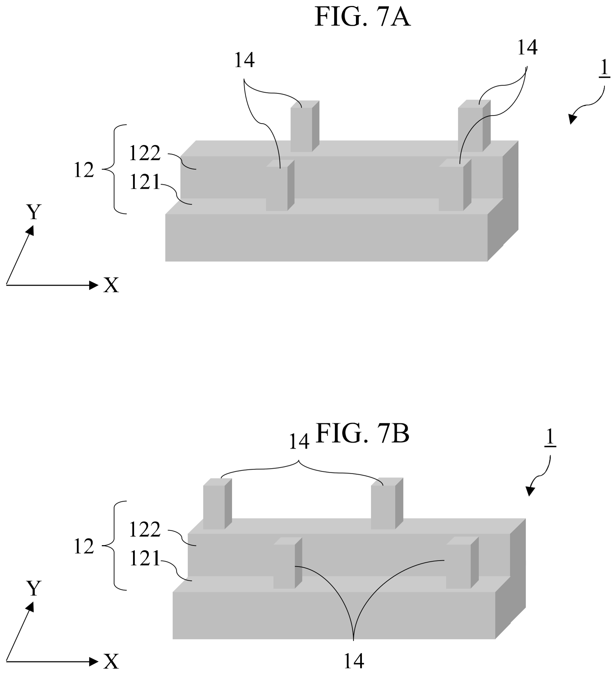

FIG. 7A is a perspective view illustrating an embodiment of wall portions 14 according to the present invention, and FIG. 7B is a perspective view illustrating another embodiment of wall portions 14 according to the present invention. As illustrated in FIG. 7A, the wall portions 14 according to the present invention may be formed at the same positions in the X-axis direction relative to a plurality of step-like recessed portions 12, 12, ... formed on the slope 11 along the Y-axis direction. Alternatively, as illustrated in FIG. 7B, for the plurality of step-like recessed portions 12, 12, ... formed on the slope 11 along the Y-axis direction, the wall portions 14 according to the present invention may be formed at positions that are offset in the X-axis direction for each or every plurality of the step-like recessed portions 12. By forming the wall portions 14 at positions that are offset in the X-axis direction for each or every plurality of the step-like recessed portions 12, the influence of the wall portions 14 is uniform across the entire slope 11.

As described above, when the wall portions 14 are discretely formed in the step-like recessed portions 12, as illustrated in FIG. 6B, the uncured paint 151 applied to the step-like recessed portions 12 tend to shrink due to its own surface tension. Fortunately, however, force nA, which is the product of a solid-liquid adhesion force n per unit area of the wall and a surface area A of the wall, is generated in the groove portion 13, and it is therefore possible to suppress the shrinkage of the uncured paint 151. As a result, the uncured paint 151 applied to the step-like recessed portions 12 is fixed in place, thereby achieving a uniform film thickness for the coating film 15.

As described above, the stereolithographic article 1 of the present embodiment comprises: a main body having a plurality of step-like recessed portions 12 formed in a layering direction by stereolithography; groove portions 13 or wall portions 14 formed discretely in the step-like recessed portions 12; and a coating film 15 applied to a surface of the main body including the step-like recessed portions 12; therefore, even when the uncured paint 151 tends to shrink due to its own surface tension, this can be suppressed by the groove portions 13 or wall portions 14. As a result, the uncured paint 151 applied to the step-like recessed portions 12 is fixed in place, thereby ensuring a uniform film thickness for the coating film 15.

Moreover, according to the stereolithographic article of the present embodiment, the groove portions 13 or wall portions 14 are formed at positions that are offset in the extension direction X of the step-like recessed portions 12 for each or every plurality of the step-like recessed portions 12; therefore, the influence of the groove portions 13 or wall portions 14 is uniform across the entire slope 11.

Furthermore, according to the stereolithographic article of the present embodiment, the groove width W1 of the groove portions 13 or the wall thickness W2 of the wall portions 14 is 100 µm or less, and it is therefore possible to uniformize the film thickness of the coating film 15 without affecting the surface smoothness of the coating film 15.

In addition, according to the stereolithographic article of the present embodiment, the groove portions 13 or the wall portions 14 are discretely formed at intervals of 500 µm or less, and it is therefore possible to further uniformize the film thickness of the coating film 15.

Moreover, according to the stereolithographic article of the present embodiment, the forming layer pitch of the step-like recessed portions 12 is 35 to 350 µm, and it is therefore possible to uniformize the film thickness of the coating film 15 while maintaining the productivity.

Furthermore, according to the stereolithographic article of the present embodiment, the groove depth D2 of the groove portions 13 is equal to or greater than 50% of the layering pitch, and it is therefore possible to uniformize the film thickness of the coating film 15 without affecting the surface smoothness of the coating film 15.

In addition, according to the stereolithographic article of the present embodiment, the wall height H2 of the wall portions 14 is equal to or greater than 50% of the layering pitch, and the length D3 of the wall of the wall portions 14 in the step direction is equal to or greater than 50% of the depth D1 of the step-like recessed portion 12; therefore, it is possible to uniformize the film thickness of the coating film 15 without affecting the surface smoothness of the coating film 15.

Moreover, the method for producing a stereolithographic article of the present embodiment includes: a step of forming a main body having a plurality of step-like recessed portions 12 in a layering direction by stereolithography; discretely forming groove portions 13 or wall portions 14 in the step-like recessed portions 12; and applying a paint to a surface of the main body including the step-like recessed portions 12; therefore, even when the uncured paint 151 tends to shrink due to its own surface tension, this can be suppressed by the groove portions 13 or wall portions 14. As a result, the uncured paint 151 applied to the step-like recessed portions 12 is fixed in place, thereby ensuring a uniform film thickness for the coating film 15.

In the method for producing a stereolithographic article of the present embodiment, the groove portions 13 or wall portions 14 may be formed in the main body simultaneously during the step of forming the main body, or may also be formed in the main body after the main body is formed.

### [Examples]

The present invention will be described below by providing examples and comparative examples that further embody the stereolithographic article for vehicles according to the present invention. Note, however, that the following specific values are those for Examples and Comparative Example for understanding the present invention and are not intended to limit the present invention.

First, the stereolithographic article 1 illustrated in FIG. 1 was fabricated using the stereolithography device 2 having the basic configuration illustrated in FIG. 2. The specific dimensions of the stereolithographic article 1 illustrated in FIG. 1 were M1=50 mm, M2=28.9 mm, and M3=20 mm. As for the layering pitch and layering pixel used when building the stereolithographic article 1, as listed in Table 1, the layering pitch and layering pixel were set to 140 µm and 70 µm, respectively, for Examples 1 to 3 and Comparative Example 1, and the layering pitch and layering pixel were set to 70 µm and 35 µm, respectively, for Example 4. Groove portions 13 were formed for Examples 1 and 2, wall portions 14 were formed for Examples 3 and 4, and neither groove portions 13 nor wall portions 14 were formed in Comparative Example 1.

The groove portions 13 in Examples 1 and 2 had a groove width W1 of 100 µm, a groove depth D2 of 100 µm, and a distance P1 between adjacent groove portions 13 of 500 µm. As illustrated in FIG. 5A, the groove portions 13 in Example 1 were formed at the same positions in the X-axis direction relative to the plurality of step-like recessed portions 12, 12, ..., and as illustrated in FIG. 5B, the groove portions 13 in Example 2 were formed at positions that were offset by 250 µm in the X-axis direction relative to the plurality of step-like recessed portions 12, 12, ..., for every 10 steps of the step-like recessed portions 12.

The wall portions 14 in Example 3 had a wall thickness W2 of 100 µm, a wall height H2 of 100 µm, and a distance P2 between adjacent wall portions 14 of 500 µm. In contrast, the wall portions 14 in Example 4 had a wall thickness W2 of 50 µm, a wall height H2 of 50 µm, and a distance P2 between adjacent wall portions 14 of 200 µm. As illustrated in FIG. 7A, the wall portions 14 in Example 3 were formed at the same positions in the X-axis direction relative to the plurality of step-like recessed portions 12, 12, ..., and as illustrated in FIG. 7B, the wall portions 14 in Example 4 were formed at positions that were offset by 250 µm in the X-axis direction relative to the plurality of step-like recessed portions 12, 12, ..., for each step of the step-like recessed portions 12. The above conditions are listed in Table 1.

### [Table 1]

**Table 1**

| | Layering (µm) | Layering pixel (µm) | Groove portions or wall portions | Groove width W1 or wall thickness W2 (µm) | Groove depth D2 or wall height H2 (µm) | Distance P1 between groove portions or distance P2 between wall portions (µm) | Presence or absence of offset |
|---|---|---|---|---|---|---|---|
| Example 1 | 140 | 70 | Groove portions | 100 | 100 | 500 | None |
| Example 2 | 140 | 70 | Groove portions | 100 | 100 | 500 | 250 µm for every 10 steps |
| Example 3 | 140 | 70 | Wall portions | 100 | 100 | 500 | None |
| Example 4 | 70 | 35 | Wall portions | 50 | 50 | 200 | 100 µm for each step |
| Comparative Example 1 | 140 | 70 | None | - | - | - | - |

The stereolithographic articles 1 of Examples 1 to 4 and Comparative Example 1, fabricated as described above, were immersed in the same paint and cured under the same conditions to form the coating films 15 on the slopes. The paint used was an ultraviolet-curable paint (Preveil, available from NIDEK CO., LTD.) with a viscosity of 30 cP, a solids content of 50 wt%, and a surface tension of 23 mN/m.

For the stereolithographic articles 1 of Examples 1 to 4 and Comparative Example 1, whose coating films 15 were formed as described above, the film thickness of each step-like recessed portion 12 was measured at the central portion and both end portions in the X-axis direction, and the surface roughness of each step-like recessed portion 12 was measured at the central portion and both end portions in the X-axis direction. To measure the film thickness, the measurement location was cut using a grindstone cut-off machine (Pcut special model, available from NIPPLA TRADING CO., LTD.), and the rough cross section was observed and measured using a microscope (VHX-7000, available from Keyence Corporation). The film thickness t was defined as that from the plane connecting the vertices of the step-like recessed portions 12 illustrated in FIG. 3C, and when the coating film protruded outward from that plane, it was designated +t, and when the coating film recessed inward, it was designated -t. Surface roughness Ra was measured as the arithmetic mean roughness Ra using a surface roughness meter (Talysurf, available from Taylor Bobson). The results are listed in Table 2.

### [Table 2]

**Table 2**

| | Film thickness (µm) | | Surface roughness (µm) | |
|---|---|---|---|---|
| | Central portion | Both end portions | Central portion | Both end portions |
| Example 1 | 10 | 10 | 0.1 | 0.1 |
| Example 2 | 12 | 11 | 0.1 | 0.1 |
| Example 3 | 15 | 12 | 0.1 | 0.1 |
| Example 4 | 11 | 10 | 0.1 | 0.1 |
| Comparative Example 1 | 13 | -5 | 0.1 | 0.8 |

### «Discussion»

From the results listed in Table 2, it has been confirmed that the film thickness and surface roughness qualities of the stereolithographic articles 1 of Examples 1 to 4 are all satisfactory. In contrast, it has been confirmed that the stereolithographic article 1 of Comparative Example 1 experiences shrinkage phenomenon of the uncured paint 151 at both end portions of the step-like recessed portions 12, resulting in a difference in film thickness of 18 µm between the central portion and both end portions, and increased surface roughness at both end portions.

Furthermore, when comparing Examples 1 to 4, no difference in surface roughness was observed, but Example 1 had the best film thickness uniformity, followed by Examples 2 and 4. Note, however, that Example 2 has a larger layering pitch than Example 4, making it satisfactory in terms of the productivity.

### Description of Reference Numerals

- 1...: Stereolithographic article
11... Slope
12... Step-like recessed portion
121... Step
D1... Step depth
122... Vertical wall
H1... Vertical wall height (=layering pitch)
13... Groove portion
W 1... Groove width
D2... Groove depth
P1... Distance between groove portions
14... Wall portion
W2... Wall thickness
H2... Wall height
D3... Wall length in step direction
P2... Distance between wall portions
15... Coating film
151... Uncured paint
- 2...: Stereolithography device
21... Liquid vat
22... Table
23... Elevator
24... Scanner
25... Ultraviolet laser light irradiator
26... Controller
27... Ultraviolet laser light
28... Ultraviolet-curable resin

## Claims

1. A stereolithographic article for a vehicle, comprising:
a main body having a plurality of step-like recessed portions formed in a layering direction by stereolithography;
groove portions or wall portions formed discretely in the step-like recessed portions; and
a coating film applied to a surface of the main body including the step-like recessed portions.

2. The stereolithographic article for a vehicle according to claim 1, wherein the groove portions or wall portions are formed at positions that are offset in an extension direction of the step-like recessed portions for each or every plurality of the step-like recessed portions.

3. The stereolithographic article for a vehicle according to claim 1 or 2, wherein a groove width of the groove portions or a wall thickness of the wall portions is 100 µm or less.

4. The stereolithographic article for a vehicle according to any one of claims 1 to 3, wherein the groove portions or wall portions are formed discretely at intervals of 500 µm or less.

5. The stereolithographic article for a vehicle according to any one of claims 1 to 4, wherein the step-like recessed portions have a layering pitch of 35 to 350 µm.

6. The stereolithographic article for a vehicle according to claim 5, wherein the groove portions have a groove depth that is 50% or more of the layering pitch.

7. The stereolithographic article for a vehicle according to claim 5, wherein
the wall portions have a wall height that is 50% or more of the layering pitch, and
walls of the wall portions has a length in a wall step direction that is 50% or more of a depth of the step-like recessed portions.

8. A method for producing a stereolithographic article for a vehicle, comprising:
a step of forming a main body having a plurality of step-like recessed portions in a layering direction by stereolithography;
discretely forming groove portions or wall portions in the step-like recessed portions; and
applying a paint to a surface of the main body including the step-like recessed portions.

9. The method for producing a stereolithographic article for a vehicle according to claim 8, wherein the groove portions or the wall portions are formed in the main body simultaneously in the step of forming the main body.

10. The method for producing a stereolithographic article for a vehicle according to claim 8, wherein the groove portions or the wall portions are formed in the main body after the main body is formed.
